# EUROPEAN PATENT SPECIFICATION

(11) **EP 1 426 649 B1**
(45) Date of publication and mention of the grant of the patent: **14.06.2006**
(21) Application number: 03257373.5
(22) Date of filing: 21.11.2003
(51) Int. Cl.: F16F 9/42, B60G 11/27

(54) **Air spring and shock absorber module**
Modul mit Luftfeder und Stossdämpfer
Module comportant un ressort à air et un amortisseur

(30) Priority: 04.12.2002 US 430906 P
(43) Date of publication of application: 09.06.2004
(73) Proprietor: Arvin Technologies, Inc., Troy, MI 48084 (US)
(72) Inventor: Weber, Arnett, Mississauga Ontario L5G 1L5 (CA)
(74) Representative: Jones, John Bryn

(56) References cited:
- DE-A- 19 811 982
- US-A- 4 493 481
- PATENT ABSTRACTS OF JAPAN vol. 2000, no. 06, 22 September 2000 (2000-09-22) & JP 2000 088029 A (TOYO TIRE &RUBBER CO LTD), 28 March 2000 (2000-03-28)

## Description

### BACKGROUND OF THE INVENTION

The application claims priority to U.S. Provisional Application No. 60/430,906 that was filed on December 4, 2002.

The present invention relates to an air spring and shock absorber module as defined in the preamble as claim 1 and to a temperature control system for a combined shock absorber and air spring module, wherein temperature within the air spring is controlled to avoid undesirably high temperatures.

Air spring and shock absorber modules are known, and have an air spring assembled over a shock absorber. The shock absorber typically contains oil. The module thus provides both a spring and a damping function. In certain applications, the shock absorber portion can reach a very high operating temperature, as an example, 176.7°C (350° F). As examples, many military applications may result in such a high temperature.

The high temperature of the shock absorber presents some design challenges, in that the air spring portion will typically have a lower maximum operating temperature. As an example, a typical air spring might only be able to withstand 93.3°C (200° F). Over time, and as the vehicle is in operation, the temperature of the air in the air spring will stabilize and approximate that of the shock absorber. Thus, when such air spring and shock absorber modules are utilized in high temperature applications, the air spring portion might be exposed to undesirably high temperatures.

US 4,493,481 discloses an air spring in the general field of the invention.

### SUMMARY OF THE INVENTION

In a disclosed embodiment of this invention, an air spring is provided with a control according to the characterising part of claim 1, which ensures the air within the air spring does not reach an undesirably high temperature. In one disclosed embodiment, the control includes a temperature responsive valve which releases air from the air spring if that air or the air spring reaches an undesirably high temperature.

The air spring is also provided with a leveling valve, as known. The leveling valve operates to ensure the suspension biased by the air spring is at a desired location relative to the vehicle frame. The leveling valve either directs additional air or evacuates air from the air spring in response to movement of the suspension relative to the vehicle frame. When utilized in combination with the temperature responsive valve, the leveling valve ensures that additional lower temperature air is injected into the air spring after the air is allowed to flow outwardly of the air spring by the temperature control valve.

These and other features of the present invention can be best understood from the following specification and drawings, the following of which is a brief description.

### BRIEF DESCRIPTION OF THE DRAWINGS

Figure 1 shows the inventive air and oil shock absorber module in a normal operative state.
Figure 2 shows the Figure 1 module after air has moved outwardly of the air spring, and before the leveling valve has directed additional air into the air spring.

### DETAILED DESCRIPTION OF THE PREFERRED EMBODIMENT

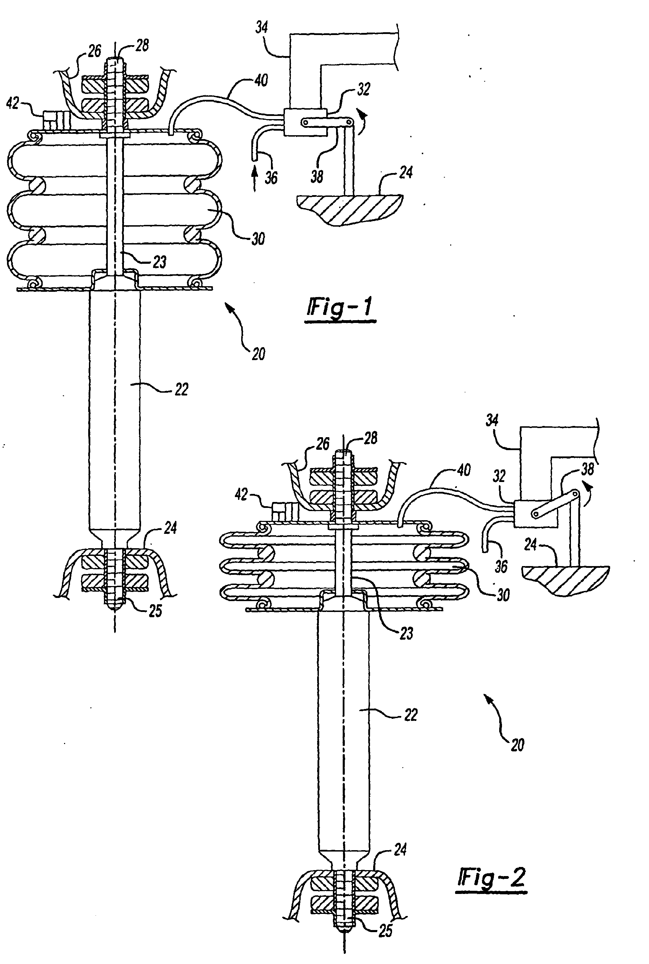

Figure 1 shows an air spring and shock absorber module 20. As shown, the shock absorber portion 22 includes a shaft 23 extending upwardly through the air spring 30. The shock absorber 22 is mounted at 25 to the suspension 24. The other end 28 of shaft 23 is attached to vehicle frame 26. As is known, the air spring 30 is supplied with air by a leveling valve 32. Leveling valve 32 is mounted, as shown schematically at 34, to the vehicle frame. A lever 38 from the leveling valve 32 is attached to the suspension 24. A high pressure air supply line 36 delivers air to the leveling valve 32. From the leveling valve 32, air can be delivered through the line 40 into the interior of the air spring 30. The leveling valve 32 is a known component in modem vehicles, and operates to maintain the relative position of the suspension 24 and the vehicle frame 34. As the relative position of the suspension 24 changes relative to the vehicle frame 34, the lever 38 moves causing air to be delivered to, or exhausted from air spring 30, as known.

As shown, a thermostat controlled valve 42 is positioned on the air spring 30. Such valves are known, and can be designed to open at a particular temperature. That is, a thermostat control usable in this invention may be a known valve. The application of such a valve on the air spring 30 is, however, inventive. In a preferred embodiment, the thermostatic control valve is designed to open at a temperature well below the maximum operating temperature of the air spring 30, say 65.6°C (150°F).

Now, during operation, and particularly if the module 20 is associated with a military vehicle, the temperature of the shock absorber 22 may increase, such as up to 176.7°C (350°F). As this temperature rise occurs, air within the air spring 30 will also increase in temperature. At some point, the air will exceed the set point of the valve 42, and the thermostat controlled valve 42 will open. When the thermostat controlled valve 42 opens, air moves outwardly of the chamber 30, as it will be at a higher pressure than the surrounding environment.

As shown in Figure 2, after the air has left the thermostat controlled valve 42, the air spring 30 is somewhat collapsed. When this occurs, the suspension 24 will be closer to the vehicle frame 26 than was the case in Figure 1. With this movement, the operating lever 38 also moves, opening leveling valve 32. As the leveling valve 32 is opened, air is delivered from supply line 36 to line 40, and into the chamber of the air spring 30. This additional air drives the air spring back to its fully expanded position such as shown in Figure 1. Replacing the hot air within the air spring 30 with the cooler air from the supply line 36 lowers the temperature of the air spring. Thus, the inventive combination provides a simple, automatic temperature control which will avoid undesirably high temperatures in the air spring.

Although a preferred embodiment of this invention has been disclosed, a worker of ordinary skill in this art would recognize that certain modifications would come within the scope of this invention.

## Claims

1. An air spring and shock absorber module (20) comprising:
an air spring (30) defining an air volume, said air spring surrounding a portion of a shock absorber (22), said shock absorber extending within said air spring; **characterised by**
a control for avoiding an undesirably high temperature within said air spring by utilising a valve that opens to allow hotter air to leave said air volume if a predetermined temperature is reached and to be replaced with cooler air.

2. A module as set forth in Claim 1, wherein said control incorporates a temperature responsive valve (42) that opens to allow air to leave said air volume if a predetermined temperature is reached.

3. A module as set forth in Claim 1 or 2, wherein a leveling valve (32) is operative to deliver said cooler air into said air spring (30) should said temperature responsive valve (42) open to allow air to leave said air volume.

4. A module as set forth in claim 2 or 3, wherein said temperature responsive valve (42) is mounted in an end of said air spring (30).

5. A system for reducing and regulating the air temperature within an air spring (30) according to claim 1 comprising:
an air spring (30) defining an air volume, said air spring surrounding a portion of a shock absorber (22), said shock absorber extending within said air spring;
a temperature responsive valve (42) provided on said air spring to monitor temperature within said air spring and to release hot air from said air volume when a predetermined temperature is reached;
an air supply line (36) for providing air from a vehicle's air supply system; and
a leveling valve (32) on said air supply line for enabling the flow of air from said air supply line into said air volume when a suspension which is to be attached to said shock module moves due to a release of hot air from said air volume.

## Patentansprüche

1. Modul (20) aus Luftfeder und Stoßdämpfer, mit:
einer Luftfeder (30), die ein Luftvolumen definiert, wobei die Luftfeder einen Abschnitt eines Stoßdämpfers (22) umgibt, wobei sich der Stoßdämpfer in der Luftfeder erstreckt; **gekennzeichnet durch**
eine Steuervorrichtung zur Vermeidung einer unerwünscht hohen Temperatur in der Luftfeder, indem ein Ventil verwendet wird, das sich öffnet, damit bei Erreichen einer vorbestimmten Temperatur wärmere Luft aus dem Luftvolumen austreten und **durch** kühlere Luft ersetzt werden kann.

2. Modul nach Anspruch 1, bei dem die Steuervorrichtung ein auf Temperatur ansprechendes Ventil (42) enthält, das sich öffnet, um das Austreten von Luft aus dem Luftvolumen zu ermöglichen, wenn eine vorbestimmte Temperatur erreicht ist.

3. Modul nach Anspruch 1 oder 2, bei dem ein Niveauregelventil (32) dazu betrieben wird, die kühlere Luft in die Luftfeder (30) zu fördern, sollte das auf Temperatur ansprechende Ventil (42) öffnen, um das Austreten von Luft aus dem Luftvolumen zu ermöglichen.

4. Modul nach Anspruch 2 oder 3, bei dem das auf Temperatur ansprechende Ventil (42) an einem Ende der Luftfeder (30) angebracht ist.

5. System zur Senkung und Regulierung der Lufttemperatur in einer Luftfeder (30) nach Anspruch 1, mit:
einer Luftfeder (30), die ein Luftvolumen definiert, wobei die Luftfeder einen Abschnitt eines Stoßdämpfers (22) umgibt, wobei sich der Stoßdämpfer in der Luftfeder erstreckt;
einem auf Temperatur ansprechenden Ventil (42), das an der Luftfeder vorgesehen ist, um die Temperatur in der Luftfeder zu überwachen und warme Luft aus dem Luftvolumen freizugeben, wenn eine vorbestimmte Temperatur erreicht ist;
einer Luftversorgungsleitung (36), um Luft aus einem Luftversorgungssystem eines Fahrzeugs bereitzustellen; und
einem Niveauregelventil (32) an der Luftversorgungsleitung, um das Strömen von Luft von der Luftversorgungsleitung in das Luftvolumen zu ermöglichen, wenn eine Aufhängung, die am Stoßmodul befestigt werden soll, sich aufgrund eines Freigebens von warmer Luft aus dem Luftvolumen bewegt.

## Revendications

1. Un module (20) de ressort pneumatique d'amortisseur comprenant:
un ressort pneumatique (30) définissant un volume d'air, ledit ressort pneumatique entourant une partie d'un amortisseur (22), ledit amortisseur s'étendant à l'intérieur dudit ressort pneumatique; **caractérisé par**
une commande, pour éviter une température indésirablement élevée à l'intérieur dudit ressort pneumatique en utilisant une valve qui s'ouvre pour permettre à de l'air plus chaud de quitter ledit volume d'air si une température prédéterminée est atteinte et d'être remplacé par de l'air plus froid.

2. Un module tel qu'indiqué à la revendication 1, dans lequel ladite commande comprend une valve réagissant à la température (42) s'ouvrant pour permettre à de l'air de quitter ledit volume d'air si une température prédéterminée est atteinte.

3. Un module tel qu'indiqué à la revendication 1 ou 2, dans lequel une valve de nivellement (32) agit pour délivrer ledit air plus froid dans ledit ressort pneumatique (30) si ladite valve réagissant à la température (42) s'ouvrait, pour permettre à de l'air de quitter ledit volume d'air.

4. Un module tel qu'indiqué à la revendication 2 ou 3, dans lequel ladite valve réagissant à la température (42) est montée dans une extrémité dudit ressort pneumatique (30).

5. Un système pour réduire et réguler la température de l'air dans un ressort pneumatique (30) selon la revendication 1, comprenant:
- un ressort pneumatique (30) définissant un volume d'air, ledit ressort pneumatique entourant une partie d'un amortisseur (22), ledit amortisseur s'étendant à l'intérieur dudit ressort pneumatique;
- une valve réagissant à la température (42), prévue sur ledit ressort pneumatique pour surveiller la température à l'intérieur dudit ressort pneumatique et pour dégager de l'air chaud depuis ledit volume d'air lorsqu'une température prédéterminée est atteinte;
- une tuyauterie (36) d'alimentation en air, pour fournir de l'air depuis un système d'alimentation en air d'un véhicule; et
- une valve de nivellement (32) sur ladite tuyauterie d'alimentation en air, pour permettre l'écoulement de l'air de ladite tuyauterie alimentation en air dans ledit volume d'air, lorsqu'une suspension, qui est attachée audit module d'amortisseur, se déplace par suite d'un dégagement d'air chaud depuis ledit volume d'air.
